# FASCICULE DE BREVET EUROPEEN

(11) **EP 1 183 562 B1**
(45) Date de publication et mention de la délivrance du brevet: **10.09.2003**
(21) Numéro de dépôt: 00940475.7
(22) Date de dépôt: 08.06.2000
(51) Int. Cl.: G02B 6/25, G02B 6/42

(54) **PROCEDE DE REALISATION COLLECTIVE DE MICRO-LENTILLES AU BOUT D'UN ENSEMBLE DE FIBRES OPTIQUES DU TYPE RUBAN DE FIBRES**
VERFAHREN ZUR MASSENHERSTELLUNG VON MIKROLINSEN AM ENDE EINER GRUPPE VON OPTISCHEN FASERN VON DER ART EINES FASERBANDES
METHOD FOR COLLECTIVE PRODUCTION OF MICROLENSES AT THE TIP OF AN OPTICAL FIBRE ASSEMBLY SUCH AS A FIBRE TAPE

(30) Priorité: 09.06.1999 FR 9907289
(43) Date de publication de la demande: 06.03.2002
(73) Titulaire: FRANCE TELECOM, 75015 Paris (FR)
(72) Inventeur: THUAL, Monique, F-22560 Trebeurden (FR); CHANCLOU, Philippe, F-22700 Louannec (FR); LOSTEC, Jean, F-22140 Prat (FR)
(74) Mandataire: Ballot, Paul Denis Jacques
(86) Numéro de dépôt international: FR0001593
(87) Numéro de publication internationale: WO00075700

(56) Documents cités:
- EP-A- 0 825 464
- US-A- 4 804 395
- US-A- 5 595 669
- SHIRAISHI K ET AL: "A FIBER LENS WITH A LONG WORKING DISTANCE FOR INTEGRATED COUPLING BETWEEN LASER DIODES AND SINGLE-MODE FIBERS" JOURNAL OF LIGHTWAVE TECHNOLOGY,US,IEEE. NEW YORK, vol. 13, no. 8, 1 août 1995 (1995-08-01), pages 1736-1744, XP000537132 ISSN: 0733-8724 cité dans la demande

## Description

L'invention concerne un procédé de réalisation collective de micro-lentilles au bout d'un ensemble de fibres optiques, du type ruban de fibres.

La présente invention s'applique aux modules optiques et optoélectroniques entre autres pour les télécommunications optiques. Elle s'applique plus particulièrement à la réalisation de micro-optiques sur fibres optiques pour améliorer le couplage entre composants optiques et optoélectroniques. Ces micro-optiques sont particulièrement adaptées au couplage collectif avec des composants actifs en barrettes, tels que des lasers, des amplificateurs à semi-conducteurs, VCSEL ou photo détecteurs par exemple.

On trouve dans la littérature un grand nombre d'articles présentant des méthodes de fabrication individuelle de micro-lentilles en bout de fibres qui améliorent le couplage entre composants actifs et fibres monomodes. L'historique de ces micro-optiques est présentée dans le recueil de publications « Microlenses Coupling light to Optical fibers », Huey-Daw Wu, Frank S. Barnes, 1991, pp. 149-213 : « Microlenses Coupling Light to Optical Fibers » IEEE lasers and electro-optics society. 1991 [1].

En revanche, on trouve très peu d'articles concernant les optiques de couplage fabriquées de manière collective.

Les articles les plus récents font état de combinaisons de tronçons de fibres de différentes natures et de façonnage d'une lentille en bout de fibres, mais toujours pour réaliser des micro-optiques de manière individuelle.

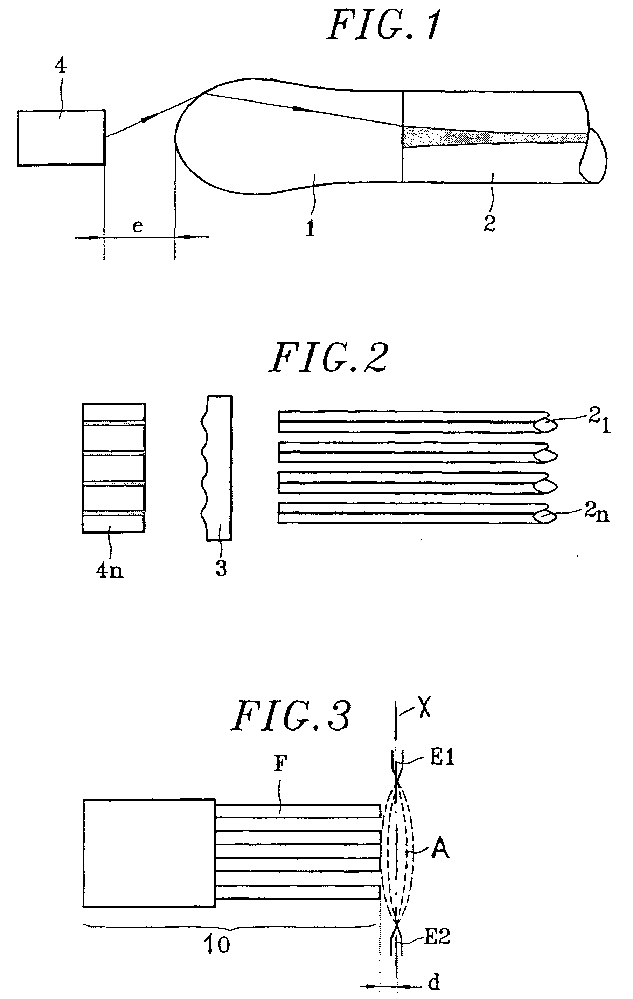

En effet, on connaît des optiques de couplage individuelles. On pourra se reporter à l'article de K. Shiraishi et al. (Université d'Utsunomiya, Japon) « a fiber with a long working distance for integrated coupling between laser diodes and single-mode fibers. » Journal of Lightwave Technology, vol.13 n°8, pp.1736-1744, August 1995 [2], qui présente une lentille dont la distance de travail est de 160 µm pour des pertes de couplage laser-fibre de 4.2 dB et des tolérances de positionnement axial, latéral et angulaire respectivement de 35 µm, 2,6 µm, et 0.8° pour une perte supplémentaire de 1 dB. Les résultats ont été obtenus pour un laser émettant à la longueur d'onde de 1.49 µm avec une divergence totale à mi-hauteur moyenne de 20.5° (soit 34° à 1/e²). Il s'agit d'un tronçon de fibre 1 sans coeur d'extrémité hémisphérique, soudé à une fibre monomode 2 dont le coeur a été localement élargi par traitement thermique tel que représenté par la figure 1.

Dans un article plus récent, Shiraishi et Hiraguri « a lensed fiber with cascaded Gi-fiber configuration for efficient coupling between LDs to single-mode fibers » ECOC'98, 20-24 September, Madrid Spain, pp-355-356 [5], proposent une nouvelle lentille constituée de deux tronçons de fibres multimodes, de différentes natures dont les paramètres de focalisation sont différents, soudés entre eux et à une fibre monomode par arc électrique. Un profil hémisphérique est conféré à la fibre multimode d'extrémité à l'aide d'une soudeuse à arc électrique. On obtient des pertes de 2dB devant une diode laser émettant à 1.3 µm dont la divergence totale en champ lointain à mi-hauteur du maximum est de 24.9° x 19.5° (soit 42.2° x 33.1° à 1/e²). La distance de travail est de 50 µm.

Si les publications concernant les optiques de couplage laser fibre individuel sont nombreuses, celles traitant d'optiques collectives destinées aux modules optiques multivoies sont plus rares.

On connaît une méthode qui consiste à intercaler une barrette de micro-lentilles (non solidaires des rubans de fibres). A titre d'exemple, l'optique de couplage représentée sur la figure 2 de G. Nakagawa et al. (Laboratoires de Fujitsù, Japon) « Highly efficient coupling between LD array and optical fiber array using Si microlens array » IEEE Photonics Technology Letters, Vol. 5, N°9,pp.1056-1058, September 1993 [4], permet d'obtenir 4.8 ± 0.3 dB par couplage dynamique entre la barrette 4 de quatre lasers de 30° de divergence totale à mi-hauteur (soit 44° à 1/ e²) et 4 fibres monomodes 2₁, 2n par l'intermédiaire d'une matrice de lentilles en silicium. Ce type de couplage complique les étapes d'assemblage, puisqu'il ajoute un élément supplémentaire à positionner très précisément.

En 1996, J. Le Bris « High performence semiconductor array module using tilted ribbon lensed fibre and dynamical alignment » ECOC'96 Oslo THc.2.3, p. 4.93.3, de la Société Alcatel (AAR, France) propose une méthode de lentillage sur ruban de fibres qui consiste à attaquer chimiquement un ruban de fibres monomodes et à refondre par arc électrique l'extrémité de chaque fibre du ruban. On obtient avec cette méthode 3.6 dB de pertes devant une barrette d'amplificateurs à semiconducteur à rubans désalignés de 20 x 25° de divergence totale à mi-hauteur (soit 34 x 42.5° à 1/e²). La longueur d'onde est de 1.55 µm.

Les solutions préconisées pour le « lentillage » des fibres (mise en place de lentilles en bout de fibres) qui permettent d'obtenir de bons taux de couplage ne sont pas des méthodes collectives dans le cas des références [1] à [3].

De plus, le diamètre extérieur de la fibre de 125 µm n'est pas maintenu tout au long de la micro-optique, ce qui pose un problème pour l'hybridation sur plate-forme silicium dans des Vés de positionnement précis et pour la mise en férule de précision.

Le document US-A-5 595 669 décrit un procédé de réalisation collective de micro lentilles au bout d'un ensemble de fibres optiques parallèles. Ce procédé comprend une étape de chauffage du bout de toutes les fibres au moyen d'un arc électrique, les faces terminales des bouts des fibres étant disposées sur une ligne prédéterminée. Les bouts des fibres respectives sont chauffés séquentiellement, en déplaçant les bouts des fibres à travers l'arc électrique dont la ligne des points les plus chauds est perpendiculaire et sécante à la ligne des faces terminales des fibres.

Pour les méthodes collectives connues à ce jour, les pertes de couplage sont encore trop élevées. De plus, l'utilisation d'optiques discrètes décrite dans la référence [4] nécessite plusieurs alignements successifs, ce qui augmente le nombre d'étapes d'assemblage par rapport aux micro-optiques rapportées en bout de fibre. La méthode décrite dans la référence [5] impose en outre des distances de travail très courtes inférieures à 15 µm outre le fait qu'elle est complexe.

La présente invention a pour but d'améliorer le couplage entre une barrette d'éléments actifs et un ensemble de fibres alignées de type ruban de fibres.

A cette fin, l'invention concerne un procédé de réalisation collective de micro-lentilles au bout d'un ensemble de fibres optiques parallèles, tel que défini à la revendication 1.

Le procédé selon l'invention présente en outre l'avantage d'être collectif donc compatible avec une production de masse, et très performant.

Selon une autre caractéristique de l'invention, la distance entre les bouts de fibres optiques et la ligne de points les plus chauds est comprise entre 850 micromètres et 950 micromètres.

Avantageusement, l'ensemble de fibres optiques est constitué par un ruban.

Selon un mode préféré de l'invention, le ruban comprend des fibres monomodes dont les terminaisons comprennent un tronçon de silice soudé à un tronçon de fibre à gradient d'indice, les micro-lentilles étant réalisées en bout des tronçons de fibres à gradient d'indice.

D'autres avantages et particularités de l'invention apparaîtront clairement à la lecture de la description qui est faite ci-après et qui est donnée à titre d'exemple non limitatif et en regard des dessins sur lesquels :
- la figure 1, représente une optique de couplage individuelle selon l'état de la technique,
- la figure 2, représente une optique de couplage collective selon l'état de la technique,
- la figure 3, représente le schéma de principe du procédé de réalisation conforme à l'invention,
- la figure 4, représente le schéma d'un ruban de fibres « lentillées » selon le procédé conforme à l'invention,
- la figure 5, illustre une photo d'un ruban « lentillé » selon l'invention.

Le procédé selon l'invention consiste à arrondir l'extrémité d'un ensemble de fibres se présentant dans la plupart des applications sous forme d'un ruban de fibres 10, à l'aide d'une soudeuse à arc électrique dont seulement les électrodes E1,E2 sont représentées, le ruban 10 étant placé loin de la ligne X des points les plus chauds de manière à ce que les bouts des fibres du ruban soient alignés à une distance d de l'ordre du millimètre (900 µm typiquement) par rapport à cette ligne de points chauds, pour être placés sur un isotherme. Ceci permet, contrairement au « lentillage » au point chaud des électrodes E1, E2, d'obtenir une forme hémisphérique non seulement homogène sur toutes les fibres du ruban, mais aussi de ne pas modifier le diamètre des fibres.

Selon un mode préféré de réalisation, le procédé est appliqué à la réalisation de lentilles hémisphériques à une micro-optique telle que décrite dans le Brevet EP 0 825 464 du déposant.

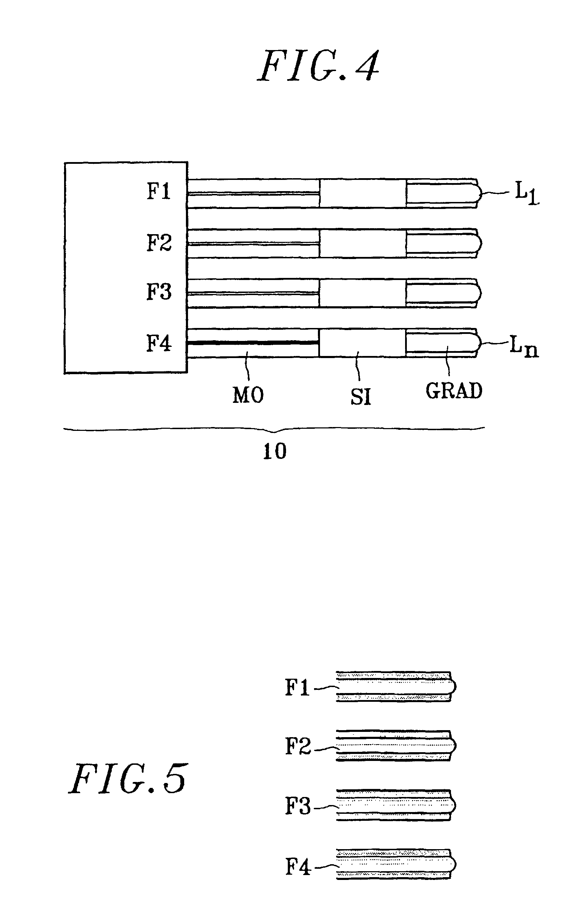

Le brevet EP 0 825 464 concerne une micro-optique collective appelée GRADISSIMO parce que constituée de tronçons de fibres multimodes à GRADIENT d'indice GRAD et de Silice SI soudés successivement entre eux et à un ruban de fibres monomodes MO, référencé 10 sur la figure 4.

L'invention consiste à « lentiller » collectivement l'extrémité de cette micro-optique.

Les pertes sont de 2.5±0.05dB devant des lasers de 60° x 50° de divergence totale en champ lointain à 1/e² de l'intensité maximum pour des distances de travail de 100 ± 5 µm, au lieu de 10,5 dB pour 15µm de distance de travail devant une fibre monomode clivée.

Les pertes sont de 1.4±0.05dB devant des lasers de 21°x21° de divergence totale en champ lointain à 1/e² de l'intensité maximum pour des distances de travail de 100±5µm, au lieu de 3,2dB pour 15µm de distance de travail devant une fibre monomode clivée.

Pour cet exemple d'application, le procédé consiste à réaliser préalablement le ruban de micro-optiques 10 dénommé « GRADISSIMO » par soudures et clivages collectifs de tronçons de fibres à gradient d'indice et de Silice sur un ruban de fibres monomodes comme décrit dans le brevet EP 0 825 464.

Ce ruban est alors placé, dans la même soudeuse collective que celle utilisée pour réaliser le ruban « GRADISSIMO », typiquement à 900 µm de la position de soudure habituelle sur l'axe optique. Ceci est possible par la commande (en option) qui permet de piloter les moteurs et l'arc de la soudeuse par interface RS232. Un arc électrique est alors envoyé, il permet d'arrondir l'extrémité des tronçons de fibres à gradient d'indice comme illustré sur les figures 3 et 4.

Le diamètre de l'hémisphère dépend de la distance arc électrique-fibre et du courant de décharge des électrodes.

A titre d'exemple on a utilisé la soudeuse SUMITOMO de type T62.

On obtient alors de manière collective un ruban de micro-optiques que l'on dénomme dans la suite « SUPERGRADISSIMO » comportant une extrémité hémisphérique comme cela est illustré dans les figures 4 et 5 permettant d'améliorer le taux de couplage devant des barrettes de composants actifs tels que lasers, amplificateurs à semi-conducteurs, ou encore photodiodes par exemple.

Les fibres étant situées loin du point chaud, seul le coeur de la fibre à gradient d'indice est refondu de sorte que le diamètre extérieur de 125 µm est maintenu sur toute la longueur de la micro-optique y compris à son extrémité.

Voici quelques exemples de réalisation à partir d'un ruban à 4 voies F1, F2, F3, F4:

### Exemple 1

On a réalisé le couplage d'un ruban de « supergradissimo » devant un laser BRS de longueur d'onde 1.301 µm de 60° x 50° de divergence totale en champ lointain à 1/e² de l'intensité maximum.

Les conditions de mesure ont été les suivantes :
T° = 21°C, courant de polarisation I = 42 mA, puissance de référence du laser 10000 µW.

Les résultats sont illustrés par le tableau suivant :

| Voie (1 fibre = une voie) | Pertes soudure silice/gradient d'indice (dB) | Longueur de silice (µm) | pertes soudure Silice/monomode | Longueur de gradient d'indice (µm) | Rayon de l'hémisphère (µm) | Pertes de couplage (dB) | Distance de travail (µm) |
|---|---|---|---|---|---|---|---|
| F1 | 0.06 | 544.00 | 0.04 | 357.19 | 68 | 2.56 | 53.5 |
| F2 | 0.02 | 546.50 | 0.03 | 358.00 | 68 | 2.59 | 54.3 |
| F3 | 0.07 | 546.12 | 0.02 | 354.45 | 68 | 2.55 | 53.3 |
| F4 | 0.03 | 546.12 | 0.05 | 357.19 | 68 | 2.52 | 54.2 |

### Exemple 2

On a réalisé le couplage d'un ruban de « supergradissimo » devant un laser BRS 1.310 µm de 21° x 21° de divergence totale en champ lointain à 1/ e² de l'intensité maximum.

Les conditions de mesure sont les suivantes :
T° = 22°C, courant de polarisation I = 72.6 mA, puissance de référence du laser 10000 µW.

Les résultats sont illustrés par le tableau suivant :

| Voie | Pertes soudure silice/gr adient d'indice (dB) | Longueur de silice (µm) | Pertes soudure Silice/ monomode | Longueur de gradient d'indice (µm) | Rayon de l'hémi sphère (µm) | Réflectivité en bout de fibre (dB) | Pertes de couplage (dB) | Distance de travail (µm) |
|---|---|---|---|---|---|---|---|---|
| F1 | 0.05 | 275.00 | 0.05 | 279.00 | 82 | -39.3 | 1.45 | 102.40 |
| F2 | 0.04 | 275.00 | 0.02 | 281.00 | 80 | -40.1 | 1.41 | 107.60 |
| F3 | 0.03 | 274.50 | 0.06 | 281.00 | 83 | -41.9 | 1.38 | 107.80 |
| F4 | 0.04 | 274.00 | 0.02 | 282.00 | 81 | -39.3 | 1.42 | 105.00 |

A titre de comparaison, du fait de son profil arrondi, la réflectivité mesurée en bout de fibre à l'aide d'un réflectomètre de type WIN-R de chez Photonétics est typiquement de -40 dB au lieu de -14.7 dB pour une fibre clivée.

De plus, la grande distance de travail limite la puissance réinjectée dans la diode laser après réflexion sur la fibre. Ceci est très important pour les applications de type amplificateurs à semiconducteur ou encore lasers à cavités externes pour lesquels les réflexions parasites perturbent le fonctionnement.

On vient de décrire un procédé de « lentillage » collectif bas coût qui permet d'améliorer le couplage entre des barrettes de composants actifs et des rubans de fibres monomodes par rapport aux techniques antérieures (jusqu'à 1.5 dB de pertes) pour de grandes distances de travail (jusqu'à 100 µm). Et ce de manière homogène sur des rubans de fibres étant bien entendu qu'il ne s'agit que d'un exemple avec 4 voies.

Les applications de l'invention dans le domaine des télécommunications s'inscrivent aussi bien dans les réseaux de distribution pour leur aspect collectif et bas coût que dans les réseaux de transmission du fait de leurs hautes performances de couplage et leur faible taux de réflectivité. Les grandes distances de travail qu'elles offrent sont un avantage pour toutes les applications, elles sont en effet moins critiques à positionner et réduisent fortement l'influence des réflexions de Fresnel.

On pourra se reporter au tableau annexé à la description qui illustre des résultats obtenus pour le rayon des sphères en fonction de la distance entre le ruban de fibres et le point chaud des électrodes E1, E2, du courant envoyé aux électrodes en unité arbitraire ainsi que du temps de décharge des électrodes. La marge indiquée pour chaque rayon correspond à la dispersion des valeurs sur le ruban.

| N° échantillon | Distance ruban/électrodes (µm) | Courant (u.a) | Temps de décharge des électrode(s) | Rayon de l'hémisphère (µm) |
|---|---|---|---|---|
| 298 | 920 | 60 | 7 | 82 ±5 |
| 297 | 920 | 60 | 7 | 80 ±5 |
| 302 | 920 | 60 | 6 | 95 ±5 |
| 288 | 910 | 60 | 5 | 110 ±5 |
| 293 | 910 | 60 | 7 | 80 ±5 |
| 285 | 910 | 59 | 7 | 90 ±5 |
| 277 | 910 | 60 | 4 (3 impacts) | 75 ±5 |
| 287 | 910 | 58 | 5 (2 impacts) | 80 ±5 |
| **295 (ex.2)** | **900** | **60** | **6** | **82 ±5** |
| 294 | 900 | 60 | 6 | 90 ±5 |
| 290 | 900 | 60 | 7 | 85 ±5 |
| 292 | 900 | 60 | 8 | 90 ±5 |
| 291 | 900 | 59 | 9 | 85 ±5 |
| 296 | 900 | 60 | 6(2 impacts) | 78 ±5 |
| 287 | 890 | 56 | 5 | 110 ±20 |
| Essai | 890 | 55 | 3 | 100 ±30 |
| Essai | 850 | 63 | 5 | 75 ±5 |
| **286 (ex.1)** | **840** | **63** | **5** | **68 ±0** |
| essai | 830 | 63 | 5 | 70 ±5 |
| essai | 730 | 63 | 5 | Pas homogène |
| essai | 400 | 50 | 2 | Pas homogène |
| essai | 350 | 45 | 3 | Pas d'arrondi |
| essai | 300 | 50 | 2 | Pas homogène |
| essai | 200 | 50 | 2 | Pas homogène |
| essai | 200 | 30 | 2 | Pas d'arrondi |
| essai | 20 | 50 | 2 | Grosses lentilles pas homogènes |

On obtient des rayons d'extrémité hémisphérique compris entre 68 et 110 µm avec une homogénéité de ±5µm sur les 4 voies du ruban pour des distances point chaud/ruban allant de 830 à 920 µm. Les rubans n° 286 et 295 font l'objet des réalisations présentées respectivement dans les exemples 1 et 2.

## Revendications

1. Procédé de réalisation collective de micro-lentilles (L) au bout d'un ensemble de fibres optiques (F) parallèles, comprenant une étape de chauffage du bout de chacune des fibres (F) au moyen d'un arc électrique (A), les faces terminales des bouts de toutes les fibres étant disposées le long d'une ligne predéterminée, ledit procédé étant **caractérisé en ce que** ledit ensemble de fibres optiques (F) parallèles est disposé de façon que ladite ligne prédéterminée le long de laquelle les faces terminales de ces fibres sont disposées s'étend parallèlement à la ligne (X) des points les plus chauds de l'arc électrique, et en deçà de cette ligne (X) des points les plus chauds, afin d'arrondir simultanément tous les bouts de fibres de façon homogène et de réaliser ainsi simultanément toutes les micro-lentilles (L).

2. Procédé de réalisation collective de micro-lentilles selon la revendication 1, **caractérisé en ce que** la distance (d) entre 1a face terminale avant des bouts de fibres optiques (F) et la ligne (X) des points les plus chauds de l'arc électrique est comprise entre 850 micromètres et 950 micromètres.

3. Procédé de réalisation collective de micro-lentilles selon la revendication 1 ou 2, **caractérisée en ce que** l'ensemble de fibres optiques (F) est constitué par un ruban (10).

4. Procédé de réalisation collective de micro-lentilles selon la revendication 3, **caractérisé en ce que** le ruban comprend des fibres monomodes (MO) dont les terminaisons comprennent un tronçon de silice (SI) soudé à un tronçon de fibre à gradient d'indice (GRAD), les micro-lentilles (L1, Ln) étant réalisées en bout des tronçons de fibres à gradient d'indice (GRAD).

## Patentansprüche

1. Verfahren zur kollektiven Bildung von Mikrolinsen (L) an dem Ende eines Ganzen von parallelen Lichtleitfasern (F), welches einen Schritt umfasst, in welchem das Ende jeder der Fasern (F) mittels eines elektrischen Lichtbogens (A) erhitzt wird, wobei die Endseiten der Enden von allen Fasern einer vorbestimmten Linie entlang angeordnet sind, wobei das besagte Verfahren **dadurch gekennzeichnet ist, dass** das besagte Ganze der parallelen Lichtleiterfasern (F) so angeordnet ist, dass die besagte vorbestimmte Linie, entlang welcher die Endseiten dieser Fasern angeordnet sind, sich parallel zu der Linie (X) der heißesten Punkte des elektrischen Lichtbogens erstreckt und unterhalb dieser Linie (X) der heißesten Punkte, um die Enden der Fasern gleichzeitig auf homogene Weise abzurunden und somit alle Mikrolinsen (L) gleichzeitig zu bilden.

2. Verfahren zur kollektiven Bildung von Mikrolinsen nach Anspruch 1, **dadurch gekennzeichnet, dass** der Abstand (d) zwischen der vorderen Endseite der Enden der Lichtleitfasern (F) und der Linie (X) der heißesten Punkte des elektrischen Lichtbogens zwischen 850 Mikrometern und 950 Mikrometern liegt.

3. Verfahren zur kollektiven Bildung von Mikrolinsen nach Anspruch 1 oder 2, **dadurch gekennzeichnet, dass** das Ganze der Lichtleitfasern (F) aus einem Band besteht.

4. Verfahren zur kollektiven Bildung von Mikrolinsen nach Anspruch 3, **dadurch gekennzeichnet, dass** das Band Monomodefasern (MO) umfasst, deren Enden einen Abschnitt aus Silizium (SI) umfassen, welcher an einen Faserabschnitt mit Gradientenindex (GRAD) geschweißt ist, wobei die Mikrolinsen (Ll, Ln) an dem Ende der Faserabschnitte mit Gradientenindex (GRAD) gebildet werden.

## Claims

1. Process for the grouped manufacture of micro-lenses (L) at the end of a group of parallel optical fibres (F), including a step of heating the end of each of these fibres (F) using an electric arc (A), the end surfaces of the ends of all these fibres being arranged along a preset line, said process being **characterised in that** said group of parallel optical fibres (F) is arranged in such a way that said preset line along which the terminal surfaces of these fibres are arranged extends parallel to the line (X) of the hottest points of the electric arc, under this side of this line (X) of hottest points in order to round off all the fibre ends simultaneously in a homogeneous way and thus to make all the micro-lenses (L) simultaneously.

2. Process for the grouped manufacture of micro-lenses according to claim 1, **characterised in that** the distance (d) between the front end surface of the ends of the optical fibres (F) and the line (X) of the hottest points of the electric arc is between 850 micrometers and 950 micrometers.

3. Process for the grouped manufacture of micro-lenses according to claim 1 or 2, **characterised in that** the group of optical fibres (F) is constituted by a sliver (10).

4. Process for the grouped manufacture of micro-lenses according to claim 3, **characterised in that** the sliver includes single mode optical fibres (MO) the ends of which include a length of silica (SI) welded to a length of graded index fibre (GRAD), the micro-lenses (L1, Ln) being made at the end of the lengths of graded index fibres (GRAD).
